# EUROPEAN PATENT APPLICATION

(11) **EP 3 517 375 A1**
(43) Date of publication of application: **31.07.2019**
(21) Application number: 19153468.4
(22) Date of filing: 24.01.2019
(51) Int. Cl.: B60S 1/40, B60S 1/52

(54) **WIPER SYSTEM INCLUDING WASHER FLUID SPRAY MEMBER**

(30) Priority: 24.01.2018 KR 20180008585
(71) Applicant: KB Wiper Systems Co., Ltd., Daegu 42705 (KR)
(72) Inventor: An, Jae Hyuck, 43008 Daegu (KR); Park, Jin Wan, 42965 Daegu (KR); Kim, Kwan Hee, 41842 Daegu (KR)
(74) Representative: Jakelski & Althoff Patentanwälte PartG mbB

(57) **Abstract**

A wiper system including a washer fluid spray member according to the embodiment of the present invention includes a seat portion which is coupled to a wiper blade; a connector which is coupled to the seat portion; a washer fluid spray member which is disposed on a side surface of the connector; and an adaptor which receives the connector and the washer fluid spray member.

## Description

### BACKGROUND

### Field

The present disclosure relates to a wiper system and more particularly to a wiper system including a washer fluid spray member, which is capable of preventing the washer fluid spray member separation by disposing the washer fluid spray member within the wiper system.

### Description of the Related Art

A windshield for preventing wind which blows from the front of a traveling vehicle or for preventing the introduction of rainwater is installed on the front side of a vehicle. If dust or dirt is accumulated on the surface of the windshield, forward visibility is difficult to ensure. In particular, when the vehicle travels in the snowy or rainy region, forward visibility can be ensured by quickly removing the water on the surface of the windshield. For this, the vehicle is equipped with a wiper system, thereby removing dust, rainwater, etc., on the surface of the windshield.

In the configuration of a conventional wiper system, the wiper system includes a wiper motor, a driving link which is operated by the wiper motor, a pivot shaft which is connected to the driving link and is driven, a wiper arm which is coupled to the upper end of the pivot shaft, and a wiper blade which is connected to the wiper arm. The central portion of the wiper blade is secured to the end of the wiper arm. When the wiper arm is operated, the wiper blade wipes various dusts or impurities present on the surface of the windshield by moving within a range of a certain angle along the surface of the windshield.

For efficiently spraying of the washer fluid which removes dusts or rainwater present on the surface of the windshield, a washer fluid spray device is generally disposed in the bonnet of the vehicle. However, some types are presented, in which the washer fluid spray device is provided outside the wiper system and directly sprays the washer fluid onto the windshield.

When the washer fluid spray device is provided outside the wiper system, a washer fluid spray member is separated or the rigidity of the washer fluid spray member is difficult to obtain due to the interference with the outside during the operation of the wiper system.

### SUMMARY

One embodiment is a wiper system including a washer fluid spray member according to the embodiment of the present invention. The wiper system includes a seat portion which is coupled to a wiper blade; a connector which is coupled to the seat portion; a washer fluid spray member which is disposed on a side surface of the connector; and an adaptor which receives the connector and the washer fluid spray member.

The adaptor includes a first space, a second space, and a third space. The connector is disposed in the first space. The washer fluid spray member is disposed in the second space. One side of a wiper bar is disposed in the third space.

The adaptor includes a base. The base includes a first sidewall extending downward from one side end of the base, and a second sidewall extending downward from the other side end of the base. The first space is surrounded by the base and the first sidewall. The second space is surrounded by the base and the second sidewall.

At least one first fixing portion for fixing the connector is formed. At least one second fixing portion for fixing the washer fluid spray member is formed on the second sidewall.

The first fixing portion and the second fixing portion are formed to protrude from ends of the first sidewall and the second sidewall respectively by a predetermined length in a direction in which the connector and the washer fluid spray member are disposed.

The first sidewall and the second sidewall are each formed in plural numbers.

A washer fluid supply member which is connected to the washer fluid spray member is disposed on a side surface of the wiper bar.

The washer fluid spray member is disposed to be spaced apart from a side surface of the connector at a predetermined distance.

### BRIEF DESCRIPTION OF THE DRAWINGS

Fig. 1 is a perspective view showing a wiper system including a washer fluid spray member in accordance with an embodiment of the present invention;
Fig. 2 is an exploded perspective view of the wiper system shown in Fig. 1;
Fig. 3 is a view showing a connector shown in Fig. 2;
Fig. 4 is a view showing the washer fluid spray member shown in Fig. 2; and
Figs. 5 and 6 are views showing an adaptor shown in Fig. 2.

### DETAILED DESCRIPTION

Embodiments of the present invention will be described in more detail with reference to the accompanying drawings. In the components of the present invention, detailed descriptions of what can be clearly understood and easily carried into practice through prior art by those skilled in the art will be omitted to avoid making the subject matter of the present invention unclear.

Hereinafter, a wiper system 10 including a washer fluid spray member 500 in accordance with an embodiment of the present invention will be described.

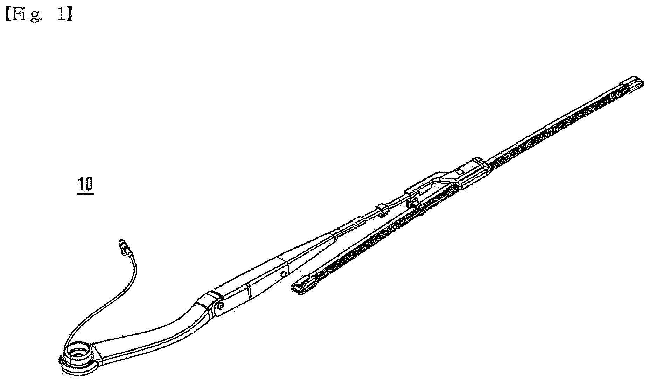

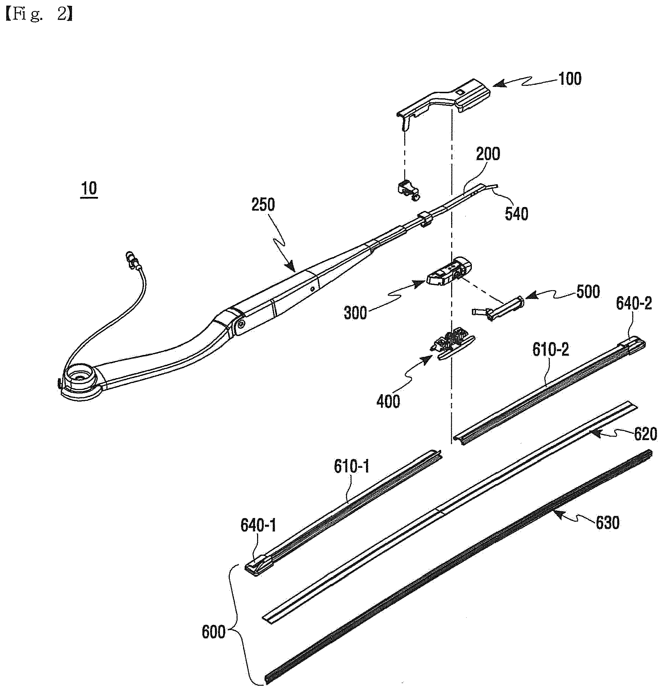

Fig. 1 is a perspective view showing the wiper system including the washer fluid spray member in accordance with the embodiment of the present invention. Fig. 2 is an exploded perspective view of the wiper system shown in Fig. 1.

Referring to Figs. 1 and 2, the wiper system 10 including the washer fluid spray member 500 in accordance with the embodiment of the present invention may include a seat portion 400, a connector 300, the washer fluid spray member 500, and an adaptor 100. Hereinafter, the respective components will be described in detail.

A wiper blade 600 according to the embodiment of the present invention may include a wiper rubber 630, a guide spring 620, a spoiler 610, and an end cap 640.

The wiper rubber 630 is disposed to slidably come into contact with the windshield glass of a vehicle and removes impurities on the windshield glass. The wiper rubber 630 extends in the longitudinal direction thereof and is made of an elastic material such as a rubber material or made of an elastic composite material.

The guide spring 620 may sustain and support the wiper rubber 630 in the longitudinal direction of the wiper rubber 630. The guide spring 620 may be curved with a predetermined curvature and may have a long thin bar shape. The wiper blade using such a guide spring 620 is known as a flat wiper blade or a flat-bar wiper blade in the art. As compared with other common wiper blades, the flat wiper blade has a less height and receives less air resistance. With a uniform load, the flat wiper blade can bring the wiper rubber 630 into contact with the windshield.

The spoiler 610 is coupled to the wiper rubber 630 and/or the guide spring 620 and fixes them. Also, when the vehicle is traveling, the spoiler 610 can prevent the wiper system 10 from rising. If the wiper system 10 rises from the windshield, a wiping performance may be degraded.

The end cap 640 ensures that the wiper rubber 630 and the guide spring 620 are firmly coupled to each other. The end cap 640 is disposed on both ends of the guide spring 620 in order that the wiper rubber 630 cannot slide and separate from the guide spring 620.

The below-described seat portion 400 may be disposed on the middle portion of the guide spring 620.

The seat portion 400 may be coupled to the wiper blade 600. Specifically, the seat portion 400 may be disposed on the middle portion of the guide spring 620 and fastened to the guide spring 620.

The seat portion 400 may be coupled to the below-described connector 300.

The seat portion 400 may include a first side and a second side. The second side is opposite to the first side. The first side and the second side may include a protrusion which protrudes in a direction perpendicular to the longitudinal direction of the guide spring 620. The protrusion may be inserted into a hole formed in the connector 300.

The shape of the seat portion 400 is not specially determined. The seat portion 400 may have various shapes capable of being fastened to the guide spring 620 disposed under the seat portion 400 and of being coupled to the connector 300 on the seat portion 400.

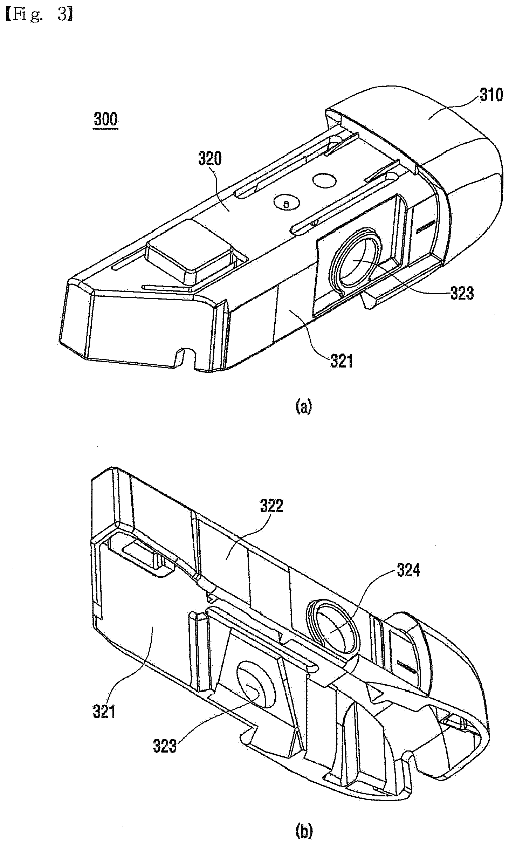

Fig. 3 is a view showing the connector shown in Fig. 2.

Referring to Figs. 2 and 3, the connector 300 may be coupled to the seat portion 400.

The connector 300 may include a connector base 320, a first connector sidewall 321, and a second connector sidewall 322.

The connector base 320 may be formed as a flat surface and may be formed as a surface having a curvature or a step in accordance with the embodiment of the present invention.

The first connector sidewall 321 and the second connector sidewall 322 may be formed to protrude downward or extend from the side end of the connector base 320. The second connector sidewall 322 is opposite to the first connector sidewall 321. Holes 323 and 324 may be each formed in the first connector sidewall 321 and the second connector sidewall 322. The protrusion of the seat portion 400 may be inserted into the holes 323 and 324.

The washer fluid spray member 500 may be disposed on a side surface of the connector 300. Here, the lateral side of the connector 300 represents the outer surface of the first connector sidewall 321 or the second connector sidewall 322.

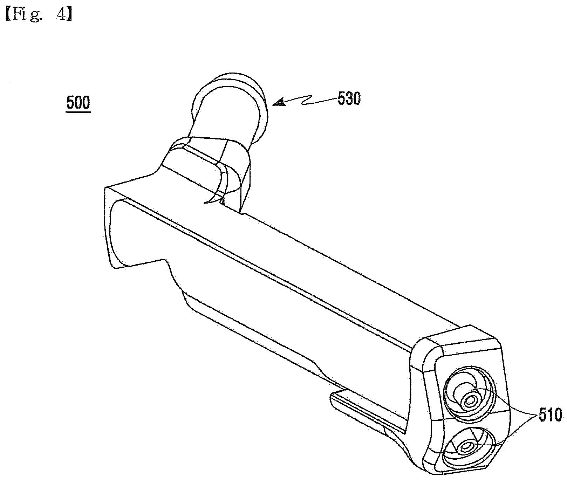

Fig. 4 is a view showing the washer fluid spray member shown in Fig. 2.

Referring to Figs. 2 and 4, the washer fluid spray member 500 may be disposed on the side surface of the connector 300. Also, the washer fluid spray member 500 may be disposed to be spaced apart from the side surface of the connector 300 at a predetermined distance. Here, the side surface of the connector 300 means the first connector sidewall 321 or the second connector sidewall 322.

The washer fluid spray member 500 can spray washer fluid.

The washer fluid spray member 500 may be disposed to be in direct contact with the side surface of the connector 300 or may be disposed apart from at a predetermined distance. When the washer fluid spray member 500 is disposed apart from at a predetermined distance, a predetermined space may be formed between the side surface of the connector 300 and one side surface of the washer fluid spray member 500. Alternatively, without a predetermined space between the side surface of the connector 300 and one side surface of the washer fluid spray member 500, a below-described barrier wall (not shown) which protrudes downward from the bottom surface of the adaptor 100 may be disposed between the side surface of the connector 300 and one side surface of the washer fluid spray member 500.

A nozzle 510 in which the washer fluid is sprayed may be disposed on one side of the washer fluid spray member 500, and a connecting portion 530 which is connected to a washer fluid supply member 540 supplying the washer fluid may be formed on the other side of the washer fluid spray member 500 (or another side of the washer fluid spray member 500).

The shape of the washer fluid spray member 500 is not specially determined. The washer fluid spray member 500 may have various shapes in which the nozzle 510 for spraying the washer fluid may be disposed on one side of the washer fluid spray member 500 and the connecting portion 530 which is connected to the washer fluid supply member 540 may be formed on the other side of the washer fluid spray member 500 (or another side of the washer fluid spray member 500).

The washer fluid supply member 540 connected to the washer fluid spray member 500 may be disposed on a side surface of a wiper bar 200 along the wiper bar 200.

The washer fluid supply member 540 is connected to the washer fluid spray member 500 to provide the washer fluid to the washer fluid spray member 500.

The wiper bar 200 generally refers to a bar-shaped component that is connected to a retainer 250 of the wiper system 10. One side of the wiper bar 200 may be connected to the adapter 100 and the other side of the wiper bar 200 can be connected to the retainer 250.

The washer fluid supply member 540 may be a hollow cylinder or a hollow polygonal tube. The washer fluid supply member 540 may be made of a metallic material or a plastic material whose shape does not change and may be made of a rubber material or a plastic material whose shape changes. Specifically, the rubber material or the plastic material whose shape changes may be a hose.

When a user operates a washer fluid spray switch in the vehicle, the washer fluid can be sprayed to the windshield by a motor through a reservoir where the washer fluid is stored, the washer fluid supply member 540, and the washer fluid spray member 500.

The washer fluid supply member 540 and the wiper bar 200 can be fixed by one or more fasteners (not shown). The one or more fasteners can limit the movement of the washer fluid supply member 540 and the movement of the wiper bar 200, thereby preventing unnecessary noise or separation of the washer fluid supply member 540 when the wiper system 10 is operated.

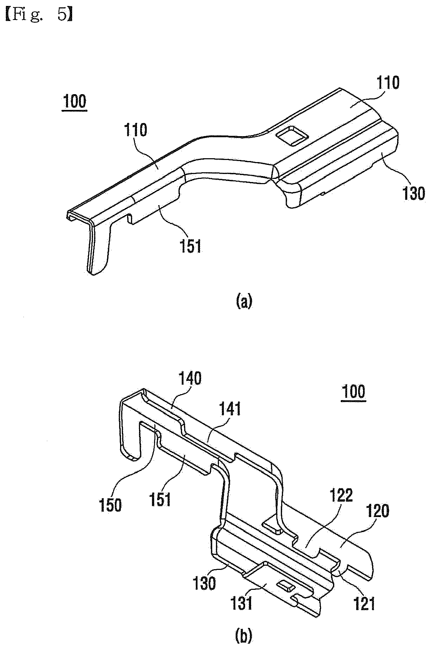

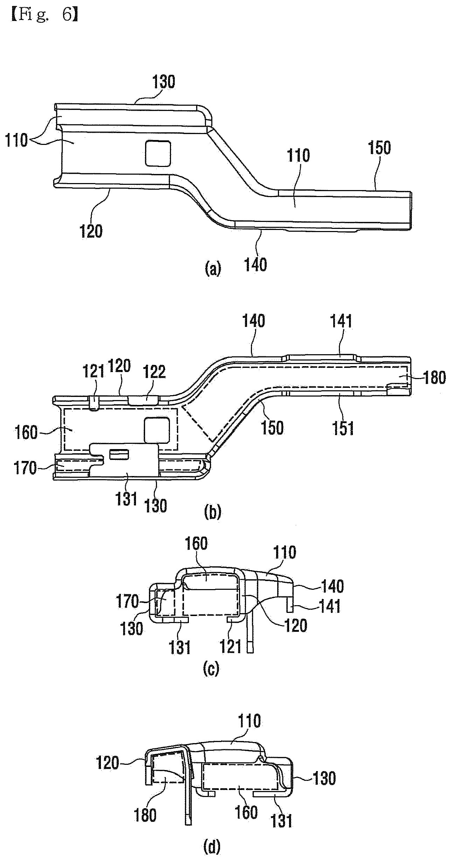

Figs. 5 and 6 are views showing the adaptor shown in Fig. 2.

Referring to Figs. 2, 5, and 6, the adapter 100 may receive the connector 300 and the washer fluid spray member 500. The adapter 100 may receive the connector 300, the washer fluid spray member 500, and one side of the wiper bar 200.

The adapter 100 receives the washer fluid spray member 500, thereby preventing the separation of the washer fluid spray member 500 and ensuring the rigidity of the washer fluid spray member 500. Further, in mounting the washer fluid spray member 500 on the adapter 100, the adaptor 100 and the washer fluid spray member 500 are simply and easily assembled, so that the production time of the wiper system 10 can be reduced.

The adapter 100 may include a first space 160, a second space 170, and a third space 180. The connector 300 may be disposed in the first space 160 and the washer fluid spray member 500 may be disposed in the second space 170 and one side (or one end) of the wiper bar 200 which is connected to the adaptor 200 may be disposed in the third space 180.

If the first space 160, the second space 170, and the third space 180 are formed in the adapter 100, the shape of the adapter 100 is not specially determined and the adapter 100 may have various shapes. The overall shape of the adapter 100 may be obtained by a combination of shapes which each correspond to the shapes of the connector 300, the washer fluid spray member 500, and one side of the wiper bar 200.

The adapter 100 may include a base 110. The base 110 includes a first sidewall 120 extending downward from one side end of the base 110 and a second sidewall 130 extending downward from the other side end of the base 110.

The first sidewall 120 and the second sidewall 130 may be formed in plural numbers. Specifically, the first sidewall 120 and the second sidewall 130 may be composed of a plurality of sidewalls extending or protruding downward from respective side ends of the base 110.

The connector 300 may be disposed in the first space 160 of the adapter 100. According to the embodiment of the present invention, the entire connector 300 may be disposed in the first space 160, and a portion of the connector 300 may be disposed in the first space 160. Describing with reference to Figs. 1 and 3 an example in which a portion of the connector 300 is disposed in the first space 160, one side 310 of the connector 300 is exposed to the outside and the remaining portion of the connector 300 may be disposed in the first space 160 and received within the adapter 100.

The first space 160 may be surrounded by the base 110 and the first sidewall 120. Specifically, the first space 160 may be surrounded by the bottom surface of the base 110 and the inner surface of the first sidewall 120.

The shape of the first space 160 may correspond to the shape of the connector 300. The bottom surface of the base 110 and the inner surface of the first sidewall 120 may correspond to the outer surfaces of the connector 300 which contact the bottom surface of the base 130 and the inner surface of the first sidewall 120 respectively.

The washer fluid spray member 500 may be disposed in the second space 170 of the adapter 100. According to the embodiment of the present invention, the entire washer fluid spray member 500 may be disposed in the second space 170 and a portion of the washer fluid spray member 500 may be disposed in the second space 170. Describing with reference to Figs. 1 and 4 an example in which a portion of the washer fluid spray member 500 is disposed in the second space 170, the nozzle 510 disposed on one side of the washer fluid spray member 500 is exposed to the outside and the remaining portion of the washer fluid spray member 500 may be disposed in the second space 170 and received within the adapter 100.

The second space 170 may be surrounded by the base 110 and the second sidewall 130. Specifically, the second space 170 may be surrounded by the bottom surface of the base 110 and the inner surface of the second sidewall 130.

The shape of the second space 170 may correspond to the shape of the washer fluid spray member 500. The bottom surface of the base 110 and the inner surface of the second sidewall 130 may correspond to the outer surfaces of the washer fluid spray member 500 which contact the bottom surface of the base 110 and the inner surface of the second sidewall 130 respectively.

One side of the wiper bar 200 may be disposed in the third space 180 of the adapter 100. Specifically, one side of the wiper bar 200 which is connected to the adapter 100 may be disposed in the third space 180.

The third space 180 may be surrounded by the base 110, a third sidewall 140 connected to the first sidewall 120, and a fourth sidewall 150 connected to the second sidewall 130. Specifically, the third space 180 may be surrounded by the bottom surface of the base 110, the inner surface of the third sidewall 140, and the inner surface of the fourth sidewall 150.

The third sidewall 140 may extend downward from one side end of the base 110 and may be connected to the first sidewall 120. The fourth sidewall 150 may extend downward from the other side end of the base 110 and may be connected to the second sidewall 130.

According to the embodiment of the present invention, the third sidewall 140 may not be connected to the first sidewall 120 and a space having a predetermined distance may be formed between the first sidewall 120 and the third sidewall 140. Also, the fourth sidewall 150 may not be connected to the second sidewall 130 and a space having a predetermined distance may be formed between the second sidewall 130 and the fourth sidewall 150.

The shape of the third space 180 may correspond to the shape of one side of the wiper bar 200. The bottom surface of the base 110, the inner surface of the third sidewall 140, and the inner surface of the fourth sidewall 150 may correspond to the outer surfaces of the wiper bar 200 which contact the bottom surface of the base 110, the inner surface of the third sidewall 140, and the inner surface of the fourth sidewall 150 respectively.

The base 110 of the adapter 100 may be formed as a flat surface, and may be formed as a surface having a curvature in accordance with the embodiment of the present invention. Also, the base 110 of the adapter 100 may be formed as a surface having a step in accordance with the shapes of the connector 300 and the washer fluid spray member 500.

The overall shape of the base 110 may be obtained by a combination of shapes which each correspond to the shapes of the connector 300 and the washer fluid spray member 500 which contact the bottom surface of the base 110 and one side of the wiper blade 200 which is connected to the adapter 100. The base 110 may have various other overall shapes.

First one or more fixing portions 121 and 122 for fixing the connector 300 may be formed on the first sidewall 120. At least one second fixing portion 131 for fixing the washer fluid spray member 500 may be formed on the second sidewall 130.

The first fixing portions 121 and 122 and the second fixing portion 131 are formed to protrude from the ends of the first sidewall 120 and the second sidewall 130 respectively by a predetermined length in the direction in which the connector 300 and the washer fluid spray member 500 are disposed.

The shapes of the first fixing portions 121 and 122 and the second fixing portion 131 are not specially determined and may have various shapes and structures which can fix the connector 300 and the washer fluid spray member 500.

At least one third fixing portion 141 for fixing one side of the wiper bar 200 may be formed on the third sidewall 140. At least one fourth fixing portion 151 for fixing one side of the wiper bar 200 may be formed on the fourth sidewall 150.

The third fixing portion 141 and the fourth fixing portion 151 may be formed to extend or protrude downward from the ends of the third sidewall 140 and the fourth sidewall 150 respectively. After one side of the wiper bar 200 is disposed in the third space 180, the third fixing portion 141 and the fourth fixing portion 151 are bent by applying a force to the third fixing portion 141 and the fourth fixing portion 151 in the direction in which one side of the wiper bar 200 is disposed, so that one side of the wiper bar 200 can be fixed.

According to the embodiment of the present invention, only the fourth fixing portion 151 may be formed without the third fixing portion 141, or only the third fixing portion 141 may be formed without the fourth fixing portion 151. If one side of the wiper bar 200 can be fixed, one of the third fixing portion 141 and the fourth fixing portion 151 may be omitted.

The shapes of the third fixing portion 141 and the fourth fixing portion 151 is not specially determined and may have various shapes and structures which can fix one side of the wiper bar 200.

The connector 300 may be disposed in the first space 160 surrounded by the bottom surface of the base 110 of the adapter 100, the inner surface of the first sidewall 120, and the first fixing portions 121 and 122. The washer fluid spray member 500 may be disposed in the second space 170 surrounded by the bottom surface of the base 110 of the adapter 100, the inner surface of the second sidewall 130, and the second fixing portion 131. One side of the wiper bar 200 may be disposed in the third space 180 surrounded by the bottom surface of the base 110, the inner surface of the third sidewall 140, the inner surface of the fourth sidewall 150, the third fixing portion 141, and the fourth fixing portion 151.

In the wiper system 10 including the washer fluid spray member 500 according to the embodiment of the present invention, the adapter 100 receives the connector 300, the washer fluid spray member 500, and one side of the wiper bar 200, it is possible to prevent the separation of the washer fluid spray member 500 from air resistance and interference with the outside and to obtain the rigidity of the washer fluid spray member 500.

Further in mounting the washer fluid spray member 500 on the adapter 100, the adaptor 100 and the washer fluid spray member 500 are easily assembled, so that the production time of the wiper system 10 can be reduced.

In the wiper system 10 including the washer fluid spray member 500 according to the embodiment of the present invention, the wiper bar 200 and the retainer can be configured to have a low-cost type through a competitive design of the adapter 100.

The features, structures and effects and the like described in the embodiments are included in at least one embodiment of the present invention and are not necessarily limited to one embodiment. Furthermore, the features, structures, effects and the like provided in each embodiment can be combined or modified in other embodiments by those skilled in the art to which the embodiments belong. Therefore, contents related to the combination and modification should be construed to be included in the scope of the present invention.

Although the embodiments of the present invention were described above, these are just examples and do not limit the present invention. Further, the present invention may be changed and modified in various ways, without departing from the essential features of the present invention, by those skilled in the art. For example, the components described in detail in the embodiments of the present invention may be modified. Further, differences due to the modification and application should be construed as being included in the scope and spirit of the present invention, which is described in the accompanying claims.

## Claims

1. A wiper system comprising:
a seat portion which is coupled to a wiper blade;
a connector which is coupled to the seat portion;
a washer fluid spray member which is disposed on a side surface of the connector; and
an adaptor which receives the connector and the washer fluid spray member.

2. The wiper system of claim 1,
wherein the adaptor comprises a first space, a second space, and a third space,
wherein the connector is disposed in the first space,
wherein the washer fluid spray member is disposed in the second space,
and wherein one side of a wiper bar is disposed in the third space.

3. The wiper system of claim 2,
wherein the adaptor comprises a base,
wherein the base comprises a first sidewall extending downward from one side end of the base, and a second sidewall extending downward from the other side end of the base,
wherein the first space is surrounded by the base and the first sidewall,
and wherein the second space is surrounded by the base and the second sidewall.

4. The wiper system of claim 3,
wherein at least one first fixing portion for fixing the connector is formed on the first sidewall,
and wherein at least one second fixing portion for fixing the washer fluid spray member is formed on the second sidewall.

5. The wiper system of claim 4, wherein the first fixing portion and the second fixing portion are formed to protrude from ends of the first sidewall and the second sidewall respectively by a predetermined length in a direction in which the connector and the washer fluid spray member are disposed.

6. The wiper system of claim 3, wherein the first sidewall and the second sidewall are each formed in plural numbers.

7. The wiper system of claim 2, wherein a washer fluid supply member which is connected to the washer fluid spray member is disposed on a side surface of the wiper bar.

8. The wiper system of claim 1, wherein the washer fluid spray member is disposed to be spaced apart from a side surface of the connector at a predetermined distance.
